# EUROPEAN PATENT APPLICATION

(11) **EP 2 415 903 A1**
(43) Date of publication of application: **08.02.2012**
(21) Application number: 09843073.9
(22) Date of filing: 27.11.2009
(51) Int. Cl.: C23C 26/00, C23C 4/10, F01D 5/28

(54) **THERMAL BARRIER COATING MATERIAL, THERMAL BARRIER COATING, TURBINE MEMBER, AND GAS TURBINE**

(30) Priority: 30.03.2009 JP 2009083362
(71) Applicant: Mitsubishi Heavy Industries, Ltd., Tokyo 108-8215 (JP)
(72) Inventor: TORIGOE, Taiji, Takasago-shi Hyogo 676-8686 (JP); NAGANO, Ichiro, Takasago-shi Hyogo 676-8686 (JP); OKADA, Ikuo, Takasago-shi Hyogo 676-8686 (JP); TSUKAGOSHI, Keizo, Takasago-shi Hyogo 676-8686 (JP); TAKAHASHI, Koji, Takasago-shi Hyogo 676-8686 (JP); OKAJIMA, Yoshifumi, Takasago-shi Hyogo 676-8686 (JP); KASUMI, Soji, Takasago-shi Hyogo 676-8686 (JP); ITO, Eisaku, Takasago-shi Hyogo 676-8686 (JP); MORI, Kazutaka, Takasago-shi Hyogo 676-8686 (JP)
(74) Representative: Henkel, Breuer & Partner
(86) International application number: PCT/JP2009/070024
(87) International publication number: WO 2010/116568

(57) **Abstract**

A thermal barrier coating material that exhibits superior high-temperature crystal stability to YSZ, as well as a high degree of toughness and an excellent thermal barrier effect. Also provided are a thermal barrier coating, which has a ceramic layer formed using the thermal barrier coating material and exhibits excellent durability to heat cycling, and a turbine member and a gas turbine which are each provided with the thermal barrier coating. The thermal barrier coating material comprises mainly ZrO₂ which contains Yb₂O₃ and Sm₂O₃ as stabilizers, wherein the amount of the stabilizers is not less than 2 mol% and not more than 7 mol%, and the amount of the Sm₂O₃ is not less than 0.1 mol% and not more than 2.5 mol%.

## Description

### {Technical Field)

The present invention relates to a thermal barrier coating material having excellent durability, and relates particularly to a ceramic layer used as the top coat of a thermal barrier coating.

### {Background Art}

In recent years, enhancement of the thermal efficiency of thermal power generation has been investigated as a potential energy conservation measure. In order to enhance the electric power generation efficiency of a power-generating gas turbine, increasing the gas inlet temperature has been shown to be effective, and in some cases this temperature is increased to approximately 1500°C. In order to realize a power generation plant that can be operated at a higher temperature in this manner, the stationary blades and moving blades that constitute the gas turbine, and the walls of the combustor and the like must be formed of heat-resistant members. However, even though the material used for the turbine blades is a heat-resistant metal, it is unable to withstand the types of high temperature mentioned above. Accordingly, a thermal barrier coating (hereinafter referred to as a "TBC" in some cases) is formed to protect the heat-resistant metal substrate from high temperatures. The thermal barrier coating is formed by using a coating-forming method such as thermal spraying to laminate a ceramic layer composed of an oxide ceramic onto the heat-resistant metal substrate, with a metal bonding layer disposed therebetween. ZrO₂-based materials are used for the ceramic layer. In particular, yttria-stabilized zirconia (hereinafter referred to as "YSZ" in some cases), which is ZrO₂ that has been partially or totally stabilized by Y₂O₃, is often used because of its relatively low thermal conductivity and relatively high coefficient of thermal expansion compared with other ceramic materials.

However, depending on the type of gas turbine, the inlet temperature for the turbine may rise to a temperature exceeding 1500°C. Further, recent trends towards improved environmental friendliness are spurring the development of gas turbines of even higher thermal efficiency, and it is thought that turbine inlet temperatures may reach 1700°C, with the surface temperature of the turbine blades reaching temperatures as high as 1300°C.

In those cases where the moving blades and/or stationary blades of a gas turbine are coated with a thermal barrier coating material containing a ceramic layer composed of the above-mentioned YSZ, there is a possibility that portions of the ceramic layer may detach during operation of the gas turbine under severe operating conditions exceeding 1500°C, resulting in a loss of heat resistance. Further, YSZ suffers from a destabilization phenomenon at temperatures exceeding 1200°C, resulting in a dramatic deterioration in the durability.

Examples of thermal barrier coatings that have been developed to exhibit excellent crystal stability under high-temperature conditions and superior thermal durability include Yb₂O₃-doped ZrO₂ (Patent Literature 1), Dy₂O₃-doped ZrO₂ (Patent Literature 2), Er₂O₃-doped ZrO₂ (Patent Literature 3), and SmYbZr₂O₇ (Patent Literature 4).

### {Citation List}

### {Patent Literature}

{PTL 1} Japanese Unexamined Patent Application, Publication No. 2003-160852 (claim 1, and paragraphs [0006] and [0027] to [0030])
{PTL 2} Japanese Unexamined Patent Application, Publication No. 2001-348655 (claims 4 and 5, and paragraphs [0010], [0011] and [0015])
{PTL 3} Japanese Unexamined Patent Application, Publication No. 2003-129210 (claim 1, and paragraphs [0013] and [0015])
{PTL 4} Japanese Unexamined Patent Application, Publication No. 2007-270245 (claim 2, and paragraphs [0028] and [0029])

### {Summary of Invention}

### {Technical Problem}

Thermal barrier coatings for turbine blades also require superior durability to heat cycling, favorable high-temperature crystal stability, and superior thermal barrier properties. However, achieving a combination of these properties has proven extremely difficult.

The present invention has an object of providing a thermal barrier coating material that exhibits superior high-temperature crystal stability to YSZ, as well as a high degree of toughness and an excellent thermal barrier effect. Further, the present invention also has an object of providing a thermal barrier coating which has a ceramic layer formed using the thermal barrier coating material and exhibits excellent durability to heat cycling, and a turbine member and gas turbine comprising the thermal barrier coating.

### {Solution to Problem}

In other words, a first aspect of the present invention provides a thermal barrier coating material comprising mainly ZrO₂ which contains Yb₂O₃ and Sm₂O₃ as stabilizers, wherein the amount of the stabilizers is not less than 2 mol% and not more than 7 mol%, and the amount of the Sm₂O₃ is not less than 0.1 mol% and not more than 2.5 mol%.
The amount of the Sm₂O₃ is preferably not less than 1.0 mol% and not more than 2.0 mol%.

Yb (ytterbium) has a smaller ionic radius than Y (yttrium), and therefore exhibits excellent crystal stability at high temperatures. ZrO₂ that contains Yb₂O₃ as a stabilizer is less prone than YSZ to the phase transformations that accompany temperature change, meaning stress caused by such phase transformations can be suppressed.
By incorporating Yb and Sm (samarium) of different atomic weights, the Zr (zirconium) adopts a more complex crystal structure with introduced lattice mismatches. This facilitates thermal scattering, which has the effect of lowering the thermal conductivity.

If the amount of the stabilizers (the combined amount of Yb₂O₃ and Sm₂O₃) within the thermal barrier coating material is less than 2 mol%, then phase transformation to the monoclinic phase tends to occur readily, and therefore the amount of the stabilizers is preferably at least 2 mol%. On the other hand, if the amount of the stabilizers exceeds 7 mol%, then the amount of the metastable tetragonal phase tends to decrease. This results in a deterioration in the fracture toughness, and therefore the amount of the stabilizers is preferably not more than 7 mol%.

If the amount of Sm₂O₃ is less than 0.1 mol%, then the desired level of thermal conductivity is unobtainable, and therefore the amount of Sm₂O₃ is preferably at least 0.1 mol%. On the other hand, if the amount of Sm₂O₃ exceeds 2.5 mol%, then although the thermal conductivity decreases, a high fracture toughness value cannot be achieved. Accordingly, the amount of Sm₂O₃ is preferably not more than 2.5 mol%.

Because the thermal barrier coating material according to the first aspect contains Yb₂O₃ and Sm₂O₃ as stabilizers in amounts that satisfy the above-mentioned ranges, a combination of high-temperature crystal stability, superior toughness and low thermal conductivity can be achieved. As a result, a thermal barrier coating that exhibits excellent durability to heat cycling can be obtained.

A thermal barrier coating according to a second aspect preferably comprises a metal bonding layer provided on a heat-resistant alloy substrate, and a ceramic layer composed of the above-mentioned thermal barrier coating material formed on top of the metal bonding layer.

The ceramic layer composed of the above-mentioned thermal barrier coating material exhibits excellent high-temperature crystal stability and has a high degree of toughness. As a result, a thermal barrier coating that exhibits excellent durability to heat cycling can be obtained.

Other aspects of the present invention provide a turbine member comprising the above-mentioned thermal barrier coating, and a gas turbine comprising the turbine member.
By adopting the above structure, a turbine member that exhibits excellent high-temperature crystal stability and superior resistance to heat cycling can be obtained. As a result, a gas turbine of superior reliability can be constructed.

### {Advantageous Effects of Invention}

A thermal barrier coating material of the composition described above exhibits excellent crystal stability at high temperature, a high degree of fracture toughness and low thermal conductivity. Accordingly, a thermal barrier coating that exhibits excellent durability to heat cycling and a superior thermal barrier effect can be obtained.

### {Brief Description of Drawings}

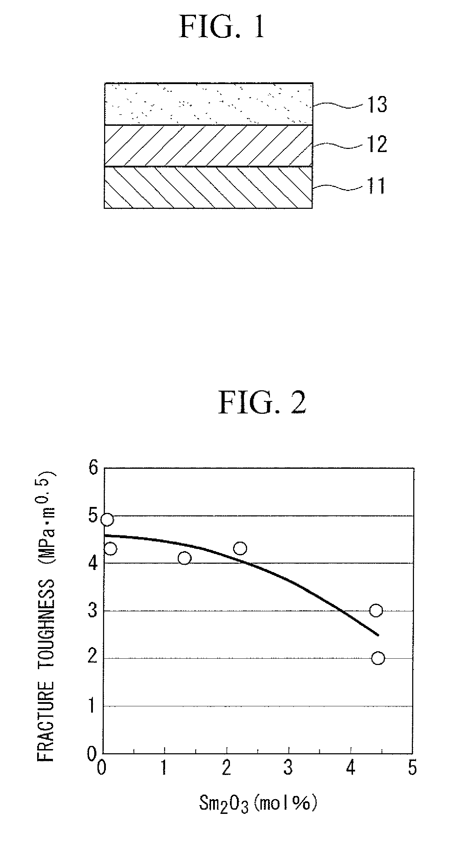

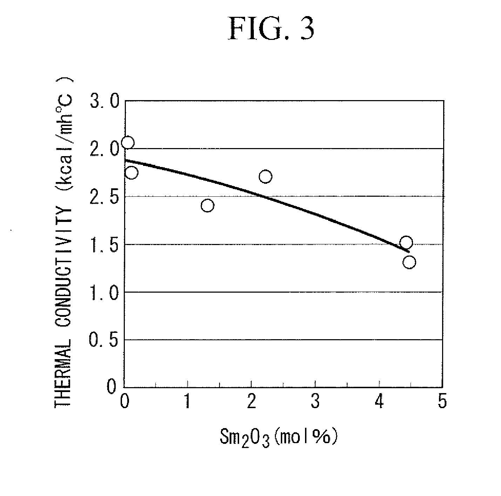

{Fig. 1} A schematic illustration of a cross-section of a turbine member using a thermal barrier coating material according to an embodiment of the present invention.
{Fig. 2} A graph illustrating the relationship between the amount of Sm₂O₃ within a sintered compact and the fracture toughness value for the examples.
{Fig. 3} A graph illustrating the relationship between the amount of Sm₂O₃ within a sintered compact and the thermal conductivity for the examples.

### {Description of Embodiments}

An embodiment of the present invention is described below.
Fig. 1 is a schematic illustration of a partial cross-section of a turbine member that uses a thermal barrier coating material according to the present embodiment. A metal bonding layer 12 and a ceramic layer 13 are formed, in that order, as a thermal barrier coating on a heat-resistant alloy substrate 11 such as the moving blade of a turbine.

The metal bonding layer 12 is formed from an MCrAIY alloy (wherein M represents a metal element such as Ni, Co or Fe, or a combination of two or more these elements) or the like.

The thermal barrier coating material that constitutes the ceramic layer 13 of the present embodiment comprises ZrO₂ that contains Yb₂O₃ and Sm₂O₃ as stabilizers. The amount of the stabilizers is not less than 2 mol% and not more than 7 mol%, and the amount of Sm₂O₃ is not less than 0.1 mol% and not more than 2.5 mol%. The amount of Sm₂O₃ is preferably not less than 1.0 mol% and not more than 2.0 mol%.

The thermal barrier coating material of this embodiment comprises Yb₂O₃ as a stabilizer, which contains Yb that has a smaller ionic radius than Y and excellent stability at high temperature. As a result, a high degree of fracture toughness is achieved, and a thermal barrier coating that exhibits excellent durability to heat cycling is obtained.

By incorporating Yb and Sm, which have larger atomic weights than that of Zr, lattice mismatches are introduced into the thermal barrier coating material of the present embodiment, creating a more complex crystal structure. This facilitates thermal scattering, which has the effect of lowering the thermal conductivity. As a result, a ceramic layer of low thermal conductivity is obtained.

The ceramic layer 13 usually includes an introduced porosity of approximately 10% in order to enhance the thermal barrier properties and lower the Young's modulus, thereby increasing the durability of the thermal barrier coating to heat cycling.

The ceramic layer 13 may be deposited by atmospheric pressure plasma spraying or electron beam physical vapor deposition or the like. In those cases where atmospheric pressure plasma spraying is employed, the thermal barrier coating material of the present embodiment is typically powder sprayed using a spray dry process or the like.

### {Examples}

A more detailed description of the thermal barrier coating material and thermal barrier coating according to the present embodiment is presented below using a series of examples.

### (Example 1)

Sintered compacts of each of the compositions shown in Table 1 were prepared by pressureless sintering under conditions including a sintering temperature of 1600°C and a sintering time of 5 hours. Yb₂O₃, Sm₂O₃ and ZrO₂ were used as the raw material powders.

The fracture toughness value for each of the sintered compacts was measured in accordance with JIS R 1607. The thermal conductivity was measured using the laser flash method prescribed in JIS R 1611. The constituent phase of the sintered compact before and after heat treatment at 1300°C for 1000 hours was identified by powder X-ray diffraction.

### (Comparative Example 1)

A sintered compact was prepared under the same conditions as those described for example 1, using ZrO₂ containing 8 mol% of added Y₂O₃.
The fracture toughness of the sintered compact and the thermal conductivity were measured in the same manner as described for example 1. Further, the constituent phase before and after heat treatment was also identified in the same manner as example 1.

The compositions of example 1 and comparative example 1, and the properties of each of the sintered compacts, are shown in Table 1.
In each example, the constituent phase following deposition was a metastable tetragonal phase. The sintered compacts of sample numbers 1 to 4 (Yb₂O₃: 4.45 to 2.3 mol%, Sm₂O₃: 0.05 to 2.2 mol%) exhibited no change in the constituent phase following the heat treatment. In contrast, the sintered compacts of the comparative example and sample numbers 5 and 6 (Yb₂O₃: 0.1 and 0.05 mol%, Sm₂O₃: 4.4 and 4.45 mol%) underwent phase transformations as a result of the heat treatment, and the constituent phase changed to a cubic phase and a monoclinic phase.

**{Table 1}**

| Sample number | Chemical component, (mol%) | | | | Sintered compact | |
|---|---|---|---|---|---|---|
| | ZrO₂ | Y₂O₃ | Yb₂O₃ | Sm₂O₃ | Thermal conductivity (kcal/mh° C) | Fracture toughness (MPa·m^{0.5}) |
| Comparative example | Bal. | 8 | - | - | 2.6 | 4 |
| 1 | Bal. | - | 4.45 | 0.05 | 2. 55 | 4. 9 |
| 2 | Bal. | - | 4. 4 | 0.1 | 2. 25 | 4.3 |
| 3 | Bal. | - | 2. 3 | 2. 2 | 2.2 | 4. 3 |
| 4 | Bal. | - | 3. 2 | 1.3 | 1.9 | 4.1 |
| 5 | Bal. | - | 0.1 | 4.4 | 1. 5 | 3 |
| 6 | Bal. | - | 0.05 | 4.45 | 1.3 | 2 |

Fig. 2 illustrates the relationship between the amount of Sm₂O₃ within the sintered compact and the fracture toughness. In this figure, the horizontal axis represents the amount of Sm₂O₃, and the vertical axis represents the fracture toughness value.
The sintered compacts of sample number 1 to 4 exhibited a higher degree of fracture toughness than the sintered compact of comparative example 1 (fracture toughness: 4 MPa·m^{0.5}). On the other hand, for the sample numbers 5 and 6, the fracture toughness was lower than that of comparative example 1.
For the sample number 1, because a large amount of Yb₂O₃ was added, which contains Yb that has a smaller ionic radius than Y and excellent crystal stability at high temperature, a higher fracture toughness than that of comparative example 1 was obtained. On the other hand, the fracture toughness decreased as the amount of added Sm₂O₃ was increased. It is thought that this is because the ionic radius of Sm is larger than that of Y.

Based on these results, it is clear that higher fracture toughness values than the comparative example 1 were obtained when the amount of Yb₂O₃ was at least 2.3 mol% and the amount of Sm₂O₃ was within a range from 0.05 to 2.2 mol%, and the highest level of fracture toughness was obtained when Y₂O₃ was added in an amount of 4.45 mol% and Sm₂O₃ was added in an amount of 0.05 mol%.

Fig. 3 illustrates the relationship between the amount of Sm₂O₃ within the sintered compact and the thermal conductivity. In this figure, the horizontal axis represents the amount of Sm₂O₃, and the vertical axis represents the thermal conductivity.
The thermal conductivity values for the sintered compacts of sample numbers 1 to 6 were all lower than the thermal conductivity of the sintered compact of comparative example 1, and the thermal conductivity decreased as the amount of Sm₂O₃ was reduced. By including both Yb₂O₃ and Sm₂O₃, thermal conductivity values were achieved that were lower than the thermal conductivity of comparative example 1.

### (Example 2)

Using a spray dry process, spray powders having each of the compositions shown in Table 1 were prepared with particle sizes of 10 to 125 µm. Using these spray powders, test pieces with a thermal barrier coating formed thereon were prepared using the method outlined below.

Using a low-pressure plasma spraying process, a metal bonding layer of thickness 100 µm was formed on an alloy metal substrate of thickness 5 mm (manufacturer: INCO Alloys International, Inc., trade name: IN-738LC, chemical composition: Ni-16Cr-8.5Co-1.75Mo-2.6W-1.75Ta-0.9Nb-3.4Ti-3.4Al (mass%)). The composition of the metal bonding layer was Ni: 32 mass%, Cr: 21 mass%, Al: 8 mass%, Y: 0.5 mass%, and Co: remainder.

Using atmospheric pressure plasma spraying, each of the above spray powders was sprayed onto the metal bonding layer, thus forming a sprayed coating (ceramic layer 13) having a thickness of 0.5 mm. A spray gun (F4 gun) manufactured by Sulzer Metco Ltd. was used for the spraying. The spraying conditions included a spray current of 600 (A), a spray distance of 150 (mm), a powder supply rate of 60 (g/min), and an Ar/H₂O ratio of 35/7.4 (1/min). The porosity of the sprayed coating was 10%. The porosity was determined from microscope photographs of a precisely polished cross-section of the thermal barrier coating, which were captured for 5 random fields of view (observation length: approximately 4 mm) using an optical microscope (magnification: 100×). The porosity was calculated by image processing as the proportion of pores within the coating cross-section.

For each of the test pieces prepared in the manner described above, the thermal conductivity of the sprayed coating was measured using the same method as that described for example 1. The constituent phase before and after heat treatment at 1300°C for 1000 hours was identified using the same method as that described for example 1, and the porosity of the sprayed coating was measured using the method described above.
The heat cycling durability of each test piece was measured using a laser heat cycling test. The test conditions included a maximum surface heating temperature for the thermal barrier coating of 1400°C, a maximum interface temperature of 950°C, a heating time of 3 minutes, and a cooling time of 3 minutes. The number of heat cycles completed before ceramic layer detachment occurred was measured.

### (Comparative Example 2)

Using the same method as example 2, a thermal barrier coating material of the composition shown in Table 1 was deposited by spraying to prepare a test piece.
The thermal conductivity of the sprayed coating, and the porosity and constituent phase before and after heat treatment, and the heat cycling durability of the test piece were measured in the same manner as example 1.

The thermal conductivity values and the constituent phase before and after heat treatment yielded similar trends to those observed for the sintered compacts of example 1 and comparative example 1.
The properties of the sprayed coatings are summarized in Table 2.

**{Table 2}**

| Sample number | Sprayed coating (evaluation as TBC) | | | | | |
|---|---|---|---|---|---|---|
| | Porosity before heating (%) | Thermal conductivity (kcal/mh° C) | Constituent phase flollowing deposition | Host cycling tost (mumber of cycles) | Constituent phase after heating | Porosity after heating (%) |
| Comparative example | 10 | 1 | Metastable tetragonal | 80 | Cubic +monoclinic | 7 |
| 1 | 10 | 0.98 | Metastable tetragonal | ≧ 300 | Metastable tetragonal | 9 |
| 2 | 10 | 0.9 | Metastable tetragonal | ≧300 | Metastable tetragonal | 9.8 |
| 3 | 10 | 0.85 | Metastable tetragonal | ≧300 | Metastable tetragonal | 9.8 |
| 4 | 10 | 0.8 | Metastable tetragonal | ≧300 | Metastable tetragonal | 9.8 |
| 5 | 10 | 0.8 | Metastable tetragonal | 200 | Metastable tetragonal | 9.8 |
| 6 | 10 | 0.75 | Metastable tetragonal | 100 | Metastable tetragonal | 9.8 |

In sample numbers 1 to 4, the constituent phase of the sprayed coating was metastable tetragonal before and after the heat treatment. As a result, the test pieces of sample numbers 1 to 4 were able to be subjected to 300 or more heat cycles. In contrast, in the case of the comparative example and sample numbers 5 and 6, the constituent phase changed as a result of the heat treatment, from a metastable tetragonal phase to a mixed phase containing a cubic phase and a monoclinic phase. The above results confirmed that for the test pieces of the sintered compacts of sample numbers 1 to 4, the durability to heat cycling was superior to that of the comparative example test piece.

In sample numbers 2 to 6, the porosity of the sprayed coating following the heat treatment was 0.2 less than the porosity prior to the heat treatment. On the other hand, in the comparative example and sample number 1, the porosity of the sprayed coating decreased by 1% and 3% respectively following the heat treatment.

### {Reference Signs List}

11 Heat-resistant alloy substrate
12 Metal bonding layer
13 Ceramic layer

## Claims

1. A thermal barrier coating material, comprising mainly ZrO₂ which contains Yb₂O₃ and Sm₂O₃ as stabilizers, wherein
an amount of the stabilizers is not less than 2 mol% and not more than 7 mol%, and
an amount of the Sm₂O₃ is not less than 0.1 mol% and not more than 2.5 mol%.

2. A thermal barrier coating, comprising a metal bonding layer provided on a heat-resistant alloy substrate, and a ceramic layer composed of the thermal barrier coating material according to claim 1 formed on top of the metal bonding layer.

3. A turbine member, comprising the thermal barrier coating according to claim 2.

4. A gas turbine, comprising the turbine member according to claim 3.
